# FASCICULE DE BREVET EUROPEEN

(11) **EP 0 496 687 B1**
(45) Date de publication et mention de la délivrance du brevet: **31.05.1995**
(21) Numéro de dépôt: 92430001.5
(22) Date de dépôt: 14.01.1992
(51) Int. Cl.: B29C 67/20, C08L 97/00, B65D 39/00, B27J 5/00, B29C 70/00

(54) **Composition utilisable pour la fabrication de bouchon et procédé de fabrication**
Zusammensetzung zur Herstellung eines Stopfens und Verfahren zur Herstellung
Composition for manufacturing of a stopper and its manufacturing method

(30) Priorité: 25.01.1991 FR 9101127
(43) Date de publication de la demande: 29.07.1992
(73) Titulaire: SABATE S.A., F-66400 Céret (FR)
(72) Inventeur: Sabate, Bernard, F-66400 Ceret (FR); Masse, Joel, F-85770 Le Gue de Velluire (FR); Jeanty, Gérard, F-66100 Perpignan (FR)
(74) Mandataire: Moretti, René

(56) Documents cités:
- FR-A- 2 278 472
- FR-A- 2 528 346
- GB-A- 517 798
- US-A- 4 042 543
- PATENT ABSTRACTS OF JAPAN vol. 4, no. 61 (C-9)(543) 8 Mai 1980 & JP-A-55 029 550 (DAINIPPON INK KAGAKU KOGYO K.K.) 1 Mars 1980
- JAPANESE PATENTS GAZETTE Section Ch, Week C45, 17 Décembre 1980 Derwent Publications Ltd., London, GB; Class A, Page 18, AN 80035 C/45 & JP-A-55 125 129 (KANEGAFUCHI CHEM. K.K.) 26 Septembre 1980

## Description

La présente invention est relative à une composition utilisable notamment pour la fabrication de bouchons, et à son procédé de fabrication.

Le domaine technique de l'invention est celui de l'industrie du liège.

De très nombreuses recherches ont été menées pour tenter de mettre au point des compositions dont les propriétés se rapprochent de celles du liège naturel et qui permettent de le remplacer notamment pour la fabrication de bouchons, par exemple de bouchons destinés à fermer les bouteilles de vin.

En effet, la récolte du liège est limitée à quelques régions du monde dans lesquelles la culture des chênes-lièges est rentable, et la production de liège naturel équilibre à peine les besoins.

Ces recherches ont conduit à fabriquer des bouchons en liège aggloméré constitué de particules de liège et d'un liant ou colle qui assure la cohésion du bouchon.

Malheureusement, le liège aggloméré n'a pas du tout les mêmes caractéristiques que le liège naturel, ce qui fait que les bouchons en liège aggloméré ne sont utilisés que pour la conservation de vins de qualité peu élevée, qui ne sont pas destinés à vieillir en bouteille.

Le liège naturel qui sert à la fabrication traditionnelle des bouchons a lui aussi des défauts: en effet, selon la qualité du liège naturel dont il est extrait, le bouchon obtenu présente des défauts souvent visibles à l'oeil nu sous forme de grosses cavités, qui peuvent être la cause de défauts d'étanchéité et qui sont parfois remplies de poudre de liège afin de rendre au bouchon un meilleur aspect et remédier à ces défauts d'étanchéité; cette disparité de qualité a d'ailleurs amené les fabricants à distinguer environ six classes de qualité de bouchons; par ailleurs, certains bouchons en liège naturel de basse qualité donnent au vin avec lequel ils sont en contact prolongé, des goûts indésirables.

On a aussi essayé de fabriquer des bouchons entièrement synthétiques, notamment à base de polyuréthanne ou d'autres matières plastiques.

La demande de brevet CA 1177600 (PAISLEY et AL) décrit et revendique une méthode de fabrication de bouchons en matière plastique (telle qu'un copolymère d'acétate d'éthylène-vinyle) par moulage.

Le brevet US 4042 543 (STRICKMAN et al.) décrit une composition pour la fabrication de bouchons qui comporte du polyéthylène ou du copolymère d'acetate de vinyle et d'éthylène mélangé à des particules de liège naturel ; la mise en oeuvre de cette composition comporte une opération de chauffage à 250°C environ permettant la fusion du copolymère.

D'autres documents décrivent des produits et procédés qui tentent de remédier aux défauts des bouchons en liège naturel, comme par exemple la demande de brevet DE 2910692 (PFEFFER KORN) qui décrit et revendique des bouchons pour bouteilles qui comportent une capsule réalisée dans un matériau absolument étanche au gaz, par exemple une capsule métallique; cette méthode possède notamment l'inconvénient d'empêcher le vieillissement du vin de fait de cette étanchéité parfaite.

Par ailleurs, le document FR 2 278 472 (Etablissements LACROIX) décrit un produit aggloméré léger et isolant, qui comprend des déchets de matière plastique qui comprennent des cellules fermées, mélangés éventuellement avec des fragments de liège ou de bois, qui sont agglomérés entre eux par une colle à base de résine.

Tous les bouchons, leurs procédés de fabrication et leur composition connus ont donc des inconvénients.

Le problème posé est donc de procurer une composition, son procédé de fabrication et son utilisation pour la fabrication de bouchons, notamment pour bouteilles de vin, qui gardent les avantages du liège naturel, qui aient donc des caractéristiques physiques voisines, sans être pénalisées par les inconvénients liés à la disparité de qualité de ces bouchons, et qui permettent de procurer des bouchons et autres produits utilisant cette composition, qui aient un aspect extérieur très similaire au liège naturel, et qui n'aient pas les inconvénients des bouchons synthétiques connus, notamment leur manque d'élasticité, leur trop parfaite étanchéité au gaz, leur aspect extérieur différent du liège naturel...

Une solution au problème posé consiste à procurer une composition constituée principalement de particules de matière végétale ligneuse, d'une matière plastique comportant des cellules fermées et d'un liant, telle que ladite matière plastique a une structure alvéolaire fermée dont les alvéoles ont une dimension moyenne inférieure à 200 microns, de préférence comprise entre 10 microns et 200 microns, laquelle matière plastique est essentiellement constituée de microsphères, de sorte que lesdites alvéoles ou microsphères sont susceptibles de contenir un fluide (liquide et/ou gazeux) constituant un agent d'expansion desdites alvéoles, et sont donc expansibles et/ou compressibles.

Avantageusement, lesdites alvéoles contiennent un hydrocarbure tel que de l'isobutane, et sont sensiblement étanches.

Avantageusement, lesdites particules de cette composition sont pour la plupart des particules fines dont la dimension moyenne est inférieure à 300 microns et de préférence comprise entre 100 et 200 microns.

Avantageusement, dans cette composition lesdites particules qui ne sont pas lesdites fines particules sont des particules grosses dont la dimension moyenne est inférieure à 5 millimètres.

Avantageusement, ladite matière végétale ligneuse de cette composition est principalement constituée par du liège naturel.

Avantageusement, dans cette composition ladite matière plastique (thermoplastique) à structure alvéolaire fermée est principalement constituée par une matière choisie parmi un polymère ou copolymère de chlorure de vinyle, un polymère ou copolymère de chlorure de vinylidène, un polymère ou copolymère de chlorure de vinyle et d'acrylonitrile, un polymère ou copolymère de chlorure de vinylidène, acrylonitrile et méthacrylate de méthyle et/ou un polymère ou copolymère de styrène et d'acrylonitrile, un polymère ou copolymère d'éthyléne ou d'acétate de vinyle ; de préférence ladite matière plastique à structure alvéolaire fermée est principalement constituée de microsphères d'un copolymère de méthacrylate de methyle et d'acrylo-nitrile, de préférence comportant au moins une part de méthacrylate de methyle pour cinq parts d'acrylonitrile.

Une solution au problème consiste également à procurer un procédé de fabrication de cette composition qui comporte les opérations suivantes:
- on mélange des particules de matière végétale ligneuse avec une matière plastique à structure alvéolaire fermée,
- on ajoute audit mélange un liant de sorte que l'on obtient un mélange pulvérulent homogène,
- on introduit ledit mélange pulvérulent homogène dans un conformateur, de préférence dans un moule ou une filière,
- on chauffe rapidement et jusqu'à une température (T₁) ledit mélange introduit dans ledit conformateur afin d'expanser lesdites alvéoles,
- on enlève dudit conformateur le produit obtenu,
   et tel que ladite température (T₁) est comprise entre 90° et 200° et est de préférence comprise entre 100° et 150° centigrades.

Il est important d'éviter de dépasser notablement la limite de 200°C afin d'éviter l'éclatement desdites alvéoles et/ou la fusion de la dite matière plastique, ce qui aurait pour conséquence une dégradation très importante des caractéristiques des produits obtenus (élasticité notamment).

Avantageusement, après avoir enlevé ledit produit obtenu dudit conformateur, on maintient ledit produit obtenu à une température (T₂) pendant quelques heures, et ladite température (T₂) est comprise entre 50° et 120° et est de préférence comprise entre 70° et 100°.

Une solution au problème posé consiste à utiliser les procédés et compositions selon l'invention pour fabriquer une partie au moins (appelée ci-après partie active) de bouchons.

Les mots "partie active" peuvent désigner tout ou partie d'un bouchon, par exemple la partie inférieure d'un bouchon par exemple de champagne qui peut être de forme semblable à la ou les rondelles de liège naturel qui sont collées et constituent la partie inférieure des bouchons de champagne connus.

Avantageusement, le bouchon comporte au moins une partie active qui est constituée d'une composition selon l'invention et ledit liant est une colle alimentaire et de préférence ledit liant est une colle alimentaire de type polyuréthanne ou acrylique, de sorte que ladite partie active est élastique et étanche aux liquides tout en conservant une faible perméabilité aux gaz.

Dans un mode particulier de réalisation de bouchons à partir de la composition selon l'invention, lesdites alvéoles non expansées de ladite composition ont un diamètre moyen de l'ordre de 5 à 28 microns, et après expansion, lesdites alvéoles expansées de ladite partie active dudit bouchon ont un diamètre moyen de l'ordre de 40 à 100 microns.

Avantageusement, la proportion en masse desdites particules de matière végétale ligneuse dans ladite partie active dudit bouchon est comprise entre 1 % et 85 % et est de préférence comprise entre 15 % et 75 %.

Avantageusement, la proportion en masse de ladite matière plastique à structure alvéolaire fermée dans ladite partie active dudit bouchon est comprise entre 1 % et 60% et est de préférence comprise ente 2 % et 25 %.

Avantageusement, la proportion en masse dudit liant dans ladite partie active du bouchon est comprise entre 5 % et 70 % et est de préférence comprise entre 15 % et 60 %.

Avantageusement, la proportion en masse d'eau dans ladite partie active dudit bouchon est inférieure à 15 % et est de préférence inférieure à 10 %.

Avantageusement, ladite partie active a un taux de vide, ou d'espaces creux remplis d'air ou dudit fluide, supérieur à 50 %, ce qui permet de comprimer aisément ladite partie active ou ledit bouchon pour l'introduction dudit bouchon dans une bouteille.

Avantageusement, ladite partie active comporte en outre un latex, de préférence sous forme d'émulsion de polyisoprène.

Les compositions et les bouchons fabriqués avec cette composition notamment avec les procédés selon l'invention, ont de nombreux avantages: la composition et les produits obtenus avec cette composition, notamment les bouchons, ont un aspect visuel extérieur extrêmement proche du liège grâce notamment à l'utilisation éventuelle de pigments ou colorants; la composition et les produits obtenus, notamment les bouchons, ont également une bonne homogénéité et permettent d'obtenir une très bonne répétabilité des caractéristiques physiques des produits fabriqués à partir de cette composition, notamment les caractéristiques mécaniques d'élasticité ainsi que les caractéristiques d'étanchéité des produits obtenus; dans l'application de l'invention à la fabrication de bouchons on obtient donc avantageusement notamment un effort de bouchage qui est constant du fait de la répétabilité de ces caractéristiques mécaniques; par ailleurs, la composition permet d'obtenir des produits, notamment des bouchons, qui vieillissent très peu, qui ont donc des caractéristiques qui sont relativement très stables dans le temps et permettent donc dans le cas d'application à des bouchons, d'autoriser le vieillissement du vin dans les bouteilles fermées par ces bouchons.

Il faut noter également que dans le cas préférentiel d'utilisation desdites microsphères expansibles constituant ladite matière plastique à structure alvéolaire fermée, lesquelles microsphères contiennent de l'isobutane, on peut expanser lesdites microsphères à des températures relativement faibles, voisines de 100°C.

On peut remarquer également que la composition selon l'invention peut être utilisée pour la fabrication de produits de formes diverses telles que profilés, plaques (dans lesquelles peuvent être découpés des bouchons)...

Grâce aux dimensions particulières des microsphères individualisées constituant ladite matière plastique à structure fermée, on obtient selon l'invention une composition et des bouchons dont l'aspect visuel est comparable à celui du liège naturel.

Les nombreux avantages procurés par l'invention seront mieux compris au travers de la description suivante, qui décrit sans aucun caractère limitatif des modes particuliers d'utilisation de la composition pour la fabrication de bouchons et les principales étapes d'un procédé selon l'invention.

Une composition selon l'invention est constituée principalement de trois composants:
- une matière végétale ligneuse, qui pour la fabrication du bouchon est de préférence du liège naturel réduit en poudre de particules fines mélangée éventuelllement avec des grosses particules ou granulés, mais qui pour d'autres applications peut éventuellement être remplacée par de la poudre et/ou des granulés de bois;
- Une matière plastique à structure alvéolaire fermée dont les alvéoles ont une dimension intérieure moyenne de l'ordre de 10 à 200 microns, et dans le cas d'utilisation de cette composition pour la fabrication de bouchons, il est intéressant d'utiliser des microsphères d'un copolymère de métacrylate de methyle et d'acrylonitrile, parfois appelées microsphères expansibles;
- Un liant qui est dans le cas d'utilisation de la composition pour la fabrication de bouchons, de préférence une colle alimentaire de type polyuréthanne ou acrylique.

A ces trois produits de base constituant la composition selon l'invention, il peut être intéressant selon l'utilisation de compléter par des additifs tels qu'agents de couplage, stabilisants, pigments ou colorants, lubrifiants, eau.

A cette composition de base selon l'invention, il peut être également intéressant d'ajouter un latex par exemple sous forme d'émulsion de poly-isoprène, qui contribue à modifier et sensiblement améliorer la cohésion du produit final; des cires ou paraffines peuvent également être ajoutées pour diminuer le coefficient de frottement des produits obtenus à partir de la composition selon l'invention et faciliter ainsi le démoulage des produits obtenus et améliorer également leurs conditions d'utilisation.

Dans un procédé de fabrication de cette composition qui peut être utilisée pour la fabrication de bouchons de cette composition ou de bouchons comportant une partie active de cette composition, on effectue les opérations suivantes:
- Afin d'obtenir un mélange des trois composants principaux de la composition selon l'invention parfaitement homogène et suffisamment stable pour procéder à l'opération de moulage ou conformation dans de bonnes conditions, on mélange préalablement les particules de matière végétale ligneuse avec la matière plastique à structure alvéolaire fermée et avec le liant; Dans un cas particulier d'utilisation de ce procédé pour la fabrication de bouchons, on mélange tout d'abord la poudre de liège constituée des fines particules de dimension moyenne inférieure à 300 microns et de préférence comprise entre 100 et 200 microns, avec éventuellement des granulés de liège aussi appelés particules grosses dont la dimension moyenne est avantageusement inférieure à 3 millimètres, avec les microsphères expansibles ou expansées ; cette opération de mélange est réalisée de préférence dans une enceinte close pour éviter l'émission de poussière dans l'atmosphère; le produit pulvérulent homogène obtenu par ce mélange est ensuite malaxé ou mélangé avec de la colle polyuréthanne jusqu'à l'obtention d'un deuxième produit pulvérulent homogène dont la couleur est très proche de celle du liège;
- On peut alors éventuellement ajouter l'émulsion de latex et/ou l'eau et/ou l'agent de lubrification et poursuivre l'agitation pendant quelques minutes; il est à noter que l'ordre d'introduction des produits dans le mélangeur n'est pas une condition de succès de ces opérations;
- Le produit pulvérulent homogène granuleux final obtenu qui est transportable par exemple par bande transporteuse ou par vis sans fin peut rester au contact de l'atmosphère quelques dizaines de minutes en l'état, sans modification de sa structure ni de son comportement lors du moulage ultérieur ou de l'extrusion;
- Une quantité adéquate de ce mélange pulvérulent est introduite de façon homogène dans un moule par exemple, de préférence métallique, qui comporte des cavités ayant la forme et les dimensions du produit à obtenir par exemple du bouchon ou de la partie active du bouchon que l'on souhaite fabriquer;
- Lorsque ledit moule est rempli dudit mélange, en l'occurrence dans un exemple de réalisation de bouchon on introduit entre 4,5 et 5 grammes dudit mélange dans chaque cavité destinée à produire un bouchon, le moule est fermé et chauffé le plus rapidement possible aux environs de 150 degrés; à cette température, lesdites microsphères expansibles s'expansent rapidement et le bouchon ou objet fabriqué acquiert sa forme définitive; cette opération de chauffage dure quelques minutes, de l'ordre de 2 à 3 minutes;
- On stoppe ensuite cette opération de chauffage et le moule se refroidissant, les produits sont maintenus ensuite à une température voisine de 100 degrés pendant quelques minutes pendant lesquelles ledit liant ou colle polyuréthanne assure la prise et la cohésion des constituants dudit bouchon;
- Le moule est ensuite ouvert et le bouchon est éjecté;
- Afin de laisser la colle polyuréthanne finir de produire ses effets, il convient de laisser les bouchons ou produits obtenus qui ont été sortis dudit moule ou conformateur à une température voisine de 90 degrés pendant plusieurs heures par exemple pendant 2 à 8 heures, pour obtenir les caractéristiques souhaitées.

Dans une variante à la composition selon l'invention, et de son procédé de mise en oeuvre pour la fabrication de produits notamment de bouchons selon l'invention, on peut utiliser des microsphères expansées en lieu et place des microsphères expansibles, et dans ce cas la phase de chauffage sera effectuée à une température inférieure, de l'ordre de 100 à 120 degrés; Dans ce cas, il sera avantageux de comprimer la composition initiale ou le produit pulvérulent obtenu par le mélange après introduction dans le moule.

Pour la fabrication de bouchons à partir de la composition et du procédé de mise en oeuvre selon l'invention, on peut utiliser les proportions suivantes des constituants de ladite composition:
- Microsphères expansées ou expansibles: 1 à 60 % et de préférence 2 à 25 %;
- Poudre et granulés de liège: 1 à 85 % et de préférence 15 à 75 %;
- Colle polyuréthanne: 10 à 70 % et de préférence au moins 15 %;
- Emulsion de latex: moins de 15 %;
- Eau: moins de 15 %;
- Cire ou paraffine: moins de 5 %;
- Catalyseur: moins de 1 %.

Les pourcentages ci-dessus sont bien sûr exprimés en terme de proportion en masse des constituants par rapport à la masse totale du mélange, c'est-à-dire à la masse totale de la composition entrant dans la fabrication des bouchons ou des parties actives dudit bouchon. Dans le cas particulier d'utilisation de la composition pour la fabrication de bouchons, les proportions suivantes apportent des résultats particulièrement intéressants:
- Microsphères expansibles de copolymère de methacrylate de methyle et d'acrylo-nitrile : entre 5 et 15 %;
- Poudre et/ou granulés de liège: entre 40 et 60 %;
- Colle polyuréthanne: entre 35 et 50 %;
- Latex et cire ou eau et catalyseur: moins de 10 %;

## Revendications

1. Composition constituée principalement de particules de matière végétale ligneuse, d'une matière plastique comportant des cellules fermées et d'un liant, caractérisée en ce que ladite matière plastique à une structure alvéolaire fermée dont les alvéoles ont une dimention moyenne inférieure à 200 microns, et en ce que lesdites alvéoles contiennent un fluide d'expansion, et en ce que ladite matière plastique est essentiellement constituée de microsphères.

2. Composition selon la revendication 1 caractérisé en ce que ledit fluide est principalement constitué par un hydrocarbure, de préférence par de l'isobutane.

3. Composition selon l'une quelconque des revendications 1 à 2 caractérisée en ce que lesdites particules sont pour la plupart des particules fines dont la dimension moyenne est inférieure à 300 microns, et en ce que lesdites particules qui ne sont pas lesdites fines particules sont des particules grosses dont la dimension moyenne est inférieure à 5 millimètres.

4. Composition selon l'une quelconque des revendications 1 à 3 caractérisée en ce que ladite matière végétale ligneuse est principalement constituée par du liège naturel.

5. Composition selon l'une quelconque des revendications 1 à 4 caractérisée en ce que ladite matière plastique à structure alvéolaire fermée est principalement constituée de microsphères d'un copolymère de methacrylate de methyle et d'acrylo-nitrile.

6. Bouchon caractérisé en ce qu'il comporte au moins une partie active qui est constituée d'une composition selon l'une quelconque des revendications 1 à 5.

7. Bouchon selon la revendication 6 caractérisé en ce que la proportion en masse desdites particules de matière végétale ligneuse dans ladite partie active dudit bouchon est comprise entre 1 % et 85 % et est de préférence comprise entre 15 % et 75 %.

8. Bouchon selon l'une quelconque des revendications 6 à 7 caractérisé en ce que la proportion en masse de ladite matière plastique à structure alvéolaire fermée dans ladite partie active dudit bouchon est comprise entre 1 % et 60 % et est de préférence comprise ente 2 % et 25 %.

9. Bouchon selon l'une quelconque des revendications 6 à 8 caractérisé en ce que la proportion en masse dudit liant dans ladite partie active du bouchon est comprise entre 5 % et 70 % et est de préférence comprise entre 15 % et 60 %.

10. Bouchon selon l'une quelconque des revendications 6 à 9 caractérisé en ce que ladite partie active a un taux d'espaces creux supérieur à 50 %.

11. Procédé de fabrication d'un produit à partir d'une composition selon l'une quelconque des revendications 1 à 5, comportant les opérations suivantes:
- on mélange des particules de matière végétale ligneuse avec une matière plastique à structure alvéolaire fermée,
- on ajoute audit mélange un liant de sorte que l'on obtient un mélange pulvérulent homogène,
- on introduit ledit mélange pulvérulent homogène dans un conformateur, de préférence dans un moule ou une filière,
- on chauffe rapidement et jusqu'à une température (T₁) ledit mélange introduit dans ledit conformateur, afin d'expanser lesdites alvéoles,
- on enlève dudit conformateur le produit obtenu,
et en ce que ladite température (T₁) est comprise entre 90° et 200° et est de préférence comprise entre 100° et 150° centigrades, et en ce que après avoir enlevé ledit produit obtenu dudit conformateur, on maintient ledit produit obtenu à une température (T₂) pendant quelques heures, et en ce que ladite température (T₂) est comprise entre 50° et 120° et est de préférence comprise entre 70° et 100°.

## Claims

1. Composition, principally constituted by particles of ligneous plant matter, a plastics material of closed cellular structure and a binding agent, characterized in that said plastics material has a closed cellular structure, the cells of which have a mean dimension less than 200 microns, and in that said cells contain an expansion fluid, and in that said plastics material is essentially constituted of microspheres.

2. Composition according to Claim 1, characterized in that said fluid is principally constituted by a hydrocarbon, preferably by isobutane.

3. Composition according to any one of Claims 1 to 2, characterized in that said particles are mostly fine particles whose mean dimension is less than 300 microns, and in that said particles which are not said fine particles are large particles whose mean dimension is less than 5 millimetres.

4. Composition according to any one of Claims 1 to 3, characterized in that said ligneous plant matter is principally constituted by natural cork.

5. Composition according to any one of Claims 1 to 4, characterized in that said plastics material of closed cellular structure is principally constituted by microspheres of a copolymer of methyl methacrylate and acrylonitrile.

6. Stopper, characterized in that it comprises at least one active part which is constituted by a composition according to any one of Claims 1 to 5.

7. Stopper according to Claim 6, characterized in that the proportion by mass of said particles of ligneous plant matter in said active part of said stopper is included between 1% and 85%, and is preferably between 15% and 75%.

8. Stopper according to any one of Claims 6 to 7, characterized in that the proportion by mass of said plastics material of closed cellular structure in said active part of said stopper is comprised between 1% and 60% and is preferably comprised between 2% and 25%.

9. Stopper according to any one of Claims 6 to 8, characterized in that the proportion by mass of said binding agent in said active part of the stopper is comprised between 5% and 70% and is preferably comprised between 15% and 60%.

10. Stopper according to any one of Claims 6 to 9, characterized in that said active part has a proportion of voids greater than 50%.

11. Process for making a product from a composition according to any one of Claims 1 to 5, comprising the following steps of:
- mixing particles of ligneous plant matter with a plastics material of closed cellular structure,
- adding to said mixture a binding agent so as to obtain a homogenous pulverent product,
- introducing said homogenous pulverulent product in a shaping device, preferably a mould or die,
- rapidly heating said product introduced in said shaping device, up to a temperature (T₁), in order to expand said cells,
- removing the product obtained from said shaping device,
and in that said temperature (T₁) is comprised between 90° and 200°C and is preferably comprised between 100° and 150°C, and in that after having removed said product obtained from said shaping device, said product obtained is maintained at a temperature (T₂) for some hours, and in that said temperature (T₂) is included between 50° and 120° and is preferably comprised between 70° and 100°C.

## Patentansprüche

1. Zusammensetzung, die hauptsächlich aus Teilchen eines pflanzlichen holzartigen Stoffs, einem geschlossene Zellen aufweisenden Kunststoff und einem Bindemittel besteht,
dadurch gekennzeichnet,
daß der Kunststoff eine geschlossene Wabenstruktur hat, deren Waben eine mittlere Abmessung unter 200 »m aufweisen, und daß diese Waben ein Ausdehnungsfluid enthalten und daß der Kunststoff im wesentlichen aus Mikrokugeln besteht.

2. Zusammensetzung nach dem Anspruch 1,
dadurch gekennzeichnet,
daß das Fluid hauptsächlich aus einem Kohlenwasserstoff, vorzugsweise aus Isobutan besteht.

3. Zusammensetzung nach irgendeinem der Ansprüche 1 bis 2,
dadurch gekennzeichnet,
daß die Teilchen in der Mehrzahl feine Teilchen sind, deren mittlere Abmessung unter 300 »m ist, und daß die Teilchen, die keine feinen Teilchen sind, grobe Teilchen sind, deren mittlere Abmessung unter 5 mm ist.

4. Zusammensetzung nach irgendeinem der Ansprüche 1 bis 3,
dadurch gekennzeichnet,
daß der pflanzliche holzartige Stoff hauptsächlich aus Naturkork besteht.

5. Zusammensetzung nach irgendeinem der Ansprüche 1 bis 4,
dadurch gekennzeichnet,
daß der Kunststoff mit geschlossener Wabenstruktur hauptsächlich aus Mikrokugeln eines Copolymers von Methylmethacrylat und Acrylnitril besteht.

6. Stopfen,
dadurch gekennzeichnet,
daß er wenigstens einen aktiven Teil aufweist, der aus einer Zusammensetzung nach irgendeinem der Ansprüche 1 bis 5 besteht.

7. Stopfen nach dem Anspruch 6,
dadurch gekennzeichnet,
daß der Massenanteil der Teilchen aus pflanzlichem holzartigem Stoff im aktiven Teil des Stopfens im Bereich von 1 % bis 85 % liegt und vorzugsweise im Bereich von 15 % bis 75 % liegt.

8. Stopfen nach irgendeinem der Ansprüche 6 bis 7,
dadurch gekennzeichnet,
daß der Massenanteil des Kunststoffs mit geschlossener Wabenstruktur im aktiven Teil des Stopfens im Bereich von 1 % bis 60 % liegt und vorzugsweise im Bereich von 2 % bis 25 % liegt.

9. Stopfen nach irgendeinem der Ansprüche 6 bis 8,
dadurch gekennzeichnet,
daß der Massenanteil des Bindemittels im aktiven Teil des Stopfens im Bereich von 5 % bis 70 % liegt und vorzugsweise im Bereich von 15 % bis 60 % liegt.

10. Stopfen nach irgendeinem der Ansprüche 6 bis 9,
dadurch gekennzeichnet,
daß der aktive Teil einen Anteil von Hohlräumen über 50 % hat.

11. Verfahren zur Herstellung eines Erzeugnisses aus einer Zusammensetzung nach irgendeinem der Ansprüche 1 bis 5, das die folgenden Arbeitsgänge aufweist:
- man vermischt Teilchen pflanzlichen holzartigen Stoffs mit einem Kunststoff mit geschlossener Wabenstruktur,
- man setzt dieser Mischung ein Bindemittel derart zu, daß man eine homogene pulverförmige Mischung erhält,
- man führt diese homogene pulverförmige Mischung in eine Formgebungseinrichtung, vorzugsweise in eine Form oder eine Strangpresse ein,
- man erhitzt die in die Formgebungseinrichtung eingeführte Mischung rasch und bis zu einer Temperatur (T₁), um die Waben auszudehnen,
- man entnimmt das erhaltene Erzeugnis der Formgebungseinrichtung,
und wobei die Temperatur (T₁) im Bereich von 90 °C bis 200 °C liegt und vorzugsweise im Bereich von 100 °C bis 150 °C liegt,
man nach der Entnahme des erhaltenen Erzeugnisses aus der Formgebungseinrichtung das erhaltene Erzeugnis während einiger Stunden bei einer Temperatur (T₂) hält und diese Temperatur (T₂) im Bereich von 50 °C bis 120 °C liegt und vorzugsweise im Bereich von 70 °C bis 100 °C liegt.
